# EUROPEAN PATENT APPLICATION

(11) **EP 4 224 592 A1**
(43) Date of publication of application: **09.08.2023**
(21) Application number: 21952361.0
(22) Date of filing: 05.08.2021
(51) Int. Cl.: H01M 10/0587, H01M 10/0583, H01M 10/04, H01M 10/0525

(54) **ELECTRODE ASSEMBLY AND PROCESSING METHOD AND APPARATUS, BATTERY CELL, BATTERY, AND ELECTRICAL APPARATUS**

(71) Applicant: Contemporary Amperex Technology Co., Limited, Fujian PRC 352100 (CN)
(72) Inventor: ZHANG, Shengwu, Ningde, Fujian 352100 (CN); TANG, Minghao, Ningde, Fujian 352100 (CN); LIN, Wenfa, Ningde, Fujian 352100 (CN); YE, Jie, Ningde, Fujian 352100 (CN)
(74) Representative: Rowlands, Stuart Michael
(86) International application number: PCT/CN2021/111045
(87) International publication number: WO 2023/010479

(57) **Abstract**

The present application provides an electrode assembly and a processing method and apparatus, a battery cell, a battery and an electrical apparatus. The electrode assembly comprises: a cathode sheet, an anode sheet and a separator, the cathode plate being bent for M times in a bending area to be provided with M beinding portions, a first attachment area being formed on the inner surface of an N-th bending portion of the cathode sheet, and a second attachment area being formed on the outer surface of the N-th bending portion; an ion blocking layer at least partially attached to the first attachment area, when charging, the ion blocking layer being used for blocking an ion falling off the first attachment area to be embedded into the anode sheet adjacent to the first attachment area; and an reinforcing layer at least partially attached to the second attachment area, an ion change channel being provided on the reinforcing layer, and the ion exchange channel being a through hole provided along the thickness direction of the reinforcing layer. In a battery cell having such a structure, the precipitation of lithium can be reduced, and the capacity and safety of the battery cell is improved.

## Description

### Technical Field

The present application relates to the field of batteries, and in particular to an electrode assembly and a processing method and device therefor, a battery cell, a battery and a power consuming device.

### Background Art

Battery cells are widely used in electronic devices, such as a mobile phone, a notebook computer, an electromobile, an electric vehicle, an electric airplane, an electric ship, an electric toy car, an electric toy ship, an electric toy airplane, and an electric tool. The battery cells may comprise a nickel-cadmium battery cell, a nickel-hydrogen battery cell, a lithium ion battery cell, a secondary alkaline zinc-manganese battery cell, etc.

In the development of the battery technology, in addition to improving the performance of battery cells, the safety is also a non-negligible issue. If the safety of battery cells cannot be guaranteed, the battery cells cannot be put in use. Therefore, how to improve the safety of battery cells is an urgent technical problem to be solved in the battery technology.

### Summary of the Invention

In various aspects, the present application provides an electrode assembly and a processing method and device therefor, a battery cell, a battery and a power consuming device, so that the safety of battery cells can be improved.

In a first aspect, the present application provides an electrode assembly, comprising: a cathode plate, an anode plate and a separator, wherein the cathode plate, the separator and the anode plate are wound in a winding direction to form a bent region, the cathode plate is bent M times to form M bent parts in the bent region, a first attachment region is formed on an inner surface of an Nth-bend part of the cathode plate, and a second attachment region is formed on an outer surface of the Nth-bend part, wherein M and N are positive integers, M ≥ 2 and 1 ≤ N ≤ M; an ion blocking layer, wherein at least a part of the ion blocking layer is attached to the first attachment region, and the ion blocking layer is used for preventing ions deintercalated from the first attachment region from being intercalated into the anode plate adjacent to the first attachment region during charging; and a reinforcing layer, wherein at least a part of the reinforcing layer is attached to the second attachment region, and the reinforcing layer is provided with ion exchange channels which are through holes provided in a thickness direction of the reinforcing layer.

By arranging the ion blocking layer in the first attachment region on the inner surface of the Nth-bend part of the cathode plate in the bent region, lithium precipitation can be effectively reduced. At least a part of ions deintercalated from the cathode active material layer in the first attachment region are blocked by the ion blocking layer during charging, such that the ions blocked by the ion blocking layer cannot be intercalated into the anode plate adjacent to the first attachment region, thereby reducing lithium precipitation. The reinforcing layer can provide reinforcement for the second attachment region on the outer surface of the cathode plate to reduce the breakage of the second attachment region of the cathode plate or the shedding of the cathode active material, thereby improving the safety of the battery cell. In addition, the ion exchange channels of the reinforcing layer allow at least a part of the ions deintercalated from the second attachment region to be intercalated into the anode plate adjacent to the second attachment region, such that the at least a part of the ions from the second attachment region can complete normal deintercalation, intercalation and shuttling and the capacity is fully utilized, thereby improving the capacity of the battery cell while improving the safety of the battery cell.

In some embodiments, the Nth-bend part comprises a first-bend part and/or a second-bend part.

In these embodiments, by providing the ion blocking layer and the reinforcing layer on the first-bend part and/or the second-bend part of the cathode plate in the bent region, the lithium precipitation of the anode plate near the inner surface of the first-bend part and/or the second-bend part of the cathode plate can be reduced, and the breakage of the outer surface of the first-bend part and/or the second-bend part of the cathode plate or the shedding of the cathode active material can be reduced, thereby improving the safety of the battery cell. The capacity loss of the battery cell can also be reduced.

In some embodiments, the electrode assembly has a flat region connected with the bent region. One end, extending in the winding direction, of each f the ion blocking layer and the reinforcing layer is located in the flat region, and the other end of each of the ion blocking layer and the reinforcing layer are located in the bent region; or the two ends, extending in the winding direction, of each of the ion blocking layer and the reinforcing layer are all located in the flat region. One or two ends of each of the ion blocking layer and the reinforcing layer are located in the flat region, which can increase the coverage area of the ion blocking layer and the reinforcing layer and ensure that the ion blocking layer and the reinforcing layer can be accurately attached to the Nth-bend part of the cathode plate.

In some embodiments, the ion blocking layer comprises a first binding layer attached to the first attachment region. The reinforcing layer comprises a reinforcing base layer and a second binding layer, and the reinforcing base layer is attached to the second attachment region by means of the second binding layer.

In some embodiments, the ion blocking layer comprises a blocking base layer and a first binding layer, and the blocking base layer is attached to the first attachment region by means of the first binding layer. The reinforcing layer comprises a reinforcing base layer and a second binding layer, and the reinforcing base layer is attached to the second attachment region by means of the second binding layer.

In some embodiments, the blocking base layer comprises a first body part and a first extension part connected with the first body part. The first binding layer is used for binding at least a part of the first body part to the first attachment region, and the first extension part protrudes from the first attachment region in the direction of the winding axis of the electrode assembly. The reinforcing base layer comprises a second body part and a second extension part connected with the second body part. The second binding layer is used for binding at least a part of the second body part to the second attachment region, and the second extension part protrudes from the second attachment region in the direction of the winding axis. The direction of the winding axis is perpendicular to the winding direction. The first extension part and the second extension part are connected by means of the first binding layer and/or the second binding layer.

In these embodiments, in the process of attaching the ion blocking layer and the reinforcing layer to the cathode plate, the lengths of the ion blocking layer and the reinforcing layer may change due to the cutting and tensile stress, which results in a risk that the ion blocking layer and the reinforcing layer cannot completely cover the cathode active material layer on the inner surface and outer surface of the Nth-bend part of the cathode plate. By providing the first extension part, which protrudes from the first attachment region in the direction of the winding axis, on the blocking base layer and providing the second extension part, which protrudes from the second attachment region in the direction of the winding axis, on the reinforcing base layer, the lengths of the ion blocking layer and the reinforcing layer can be increased, and the risk that the ion blocking layer and the reinforcing layer cannot effectively cover the cathode active material layer on the inner surface and outer surface of the Nth-bend part of the cathode plate is avoided. In addition, the first binding layer and the second binding layer have stickiness and may stick to the winding equipment in the production process of the electrode assembly, which leads to unfavorable states of the ion blocking layer and the reinforcing layer, such as shedding and upwarp, and thus results in the failure of the ion blocking layer and the reinforcing layer or damages the structure of the electrode assembly. By connecting the first extension part with the second extension part by means of the first binding layer and/or the second binding layer, the portions, protruding from the cathode plate, of the ion blocking layer and the reinforcing layer lose stickiness, such that the problem that the failure resulting from sticking to the winding equipment is avoided. Meantime, the ion blocking layer and the reinforcing layer are adhered to each other, which reduces the risk that the ion blocking layer and the reinforcing layer are shed from the cathode plate and improves the reliability of the ion blocking layer and the reinforcing layer in the service life of the battery cell.

In some embodiments, the blocking base layer is made of a material including at least one of polyvinyl chloride, polyethylene, polypropylene, polyvinylidene fluoride, a hexafluoropropylene-vinylidene fluoride copolymer, a tetrafluoropropylene-vinylidene fluoride copolymer, a trifluorochloropropylene-vinylidene fluoride copolymer, polyethylene terephthalate, polyimide, polyetherimide, polycarbonate, polystyrene, polyphenylene sulfide, polyvinylidene fluoride or a copolymer thereof, polyarylate, fibers, nylon and non-woven fabrics.

In some embodiments, the first binding layer and/or the second binding layer is made of a material including at least one of an acrylic acid-acrylate copolymer, a butadiene-styrene copolymer, a styrene-acrylic acid copolymer, a styrene-acrylate copolymer, an ethylene-vinyl acetate copolymer, an acrylic acid grafted polyethylene, a maleic anhydride grafted polyethylene, an acrylic acid grafted polypropylene, a maleic anhydride grafted polypropylene, polyvinylidene fluoride, carboxymethyl cellulose, polyimide, polyetherimide, polyethylene terephthalate, a styrene-isoprene-styrene copolymer (rubber), an ethylene-vinyl acetate copolymer bisphenol A epoxy resin, an ethylene-vinyl acetate copolymer bisphenol F epoxy resin, a glyceryl ether epoxy resin, a glyceryl ester epoxy resin, a silicone resin, polyurethane and a styrene-isoprene-styrene copolymer.

In some embodiments, the reinforcing base layer is made of a material including at least one of polyvinyl chloride, polyethylene, polypropylene, polyvinylidene fluoride, a hexafluoropropylene-vinylidene fluoride copolymer, a tetrafluoropropylene-vinylidene fluoride copolymer, a trifluorochloropropylene-vinylidene fluoride copolymer, polyethylene terephthalate, polyimide, polyetherimide, polycarbonate, polystyrene, polyphenylene sulfide, polyvinylidene fluoride or a copolymer thereof, polyarylate, fibers, nylon and non-woven fabrics.

In some embodiments, the through holes penetrate through the reinforcing base layer and the second binding layer.

In these embodiments, the second binding layer can maintain the reinforcing layer on the outer surface of the cathode plate, and the second binding layer can also store and maintain the electrolyte solution on the surface of the cathode plate to replenish the electrolytic solution consumed in the cycle, which is conducive to the conduction and diffusion of the ions, thereby improving the performance of the battery cell. The through holes penetrate through the reinforcing base layer and the second binding layer, such that the ion exchange channels can penetrate through the reinforcing base layer and the second binding layer, which is conducive to the release of the electrolyte solution and the conduction and diffusion of the ions and is conductive to improving the capacity and cycle performance of the battery cell and prolonging the service life of the battery cell. The second binding layer has a certain fluidity and thus easily moves and deforms on the surface of the cathode plate, which further affects the distribution uniformity of the electrolyte solution. The reinforcing base layer can inhibit the movement and deformation of the second binding layer and uniformly maintain the second binding layer on the surface of the cathode plate while allowing the ions to flow, such that the electrolyte solution can be stably maintained on the surface of the cathode plate for a long time, which is conductive to improving the cycle performance of the battery cell and prolonging the service life.

In some embodiments, in the winding direction, adsorption regions and perforated regions are arranged on the reinforcing layer, at least a part of the through holes are distributed in the perforated regions, and the adsorption regions have a porosity smaller than that of the perforated regions; or in the direction of the winding axis of the electrode assembly, the through holes are distributed on the reinforcing layer in a broken line or a curved line.

In these embodiments, the adsorption regions and the perforated regions are arranged on the reinforcing layer, at least a part of the through holes are distributed in the perforated regions, and the perforated regions are used for the ions to pass through, which is conductive to the release of the electrolyte solution and the conduction and diffusion of the ions and is conductive to improving the capacity and cycle performance of the battery cell and prolonging the service life of the battery cell. In addition, the porosity of the adsorption regions is smaller than that of the perforated regions, which is conducive to installing the reinforcing layer on the cathode plate by adsorbing on the adsorption region with a vacuum adsorption apparatus in the production of the electrode assembly. The small porosity of the adsorption region can reduce the impact on the vacuum adsorption operation.

In these embodiments, the through holes are distributed on the reinforcing layer in a broken line or curved line, such that the through holes are distributed at positions of a different width and height in the reinforcing layer and the reinforcing layer, can achieve the release of the electrolyte solution and the conduction and diffusion of ions at positions of a different height and width, which is conducive to improving the cycle performance and prolonging service life of the battery. In addition, the broken line or curved line makes the porosity of the middle region in the winding direction of the reinforcing layer greater than that of the two sides of the reinforcing layer, which is conductive to forming adsorption regions on two sides of the reinforcing layer.

In a second aspect, the present application provides a battery cell, comprising: a housing, an electrolyte solution, a cover plate, and at least one electrode assembly of the embodiments described above, wherein the housing has a receiving cavity and an opening, and the electrode assembly and the electrolyte solution are received in the receiving cavity; and the cover plate is used for sealing the opening of the housing.

In a third aspect, the present application provides a battery, comprising a case and at least one battery cell of the embodiment described above, wherein the battery cell is received in the case.

In a fourth aspect, the present application provides a power consuming device. The power consuming device is configured to receive power provided by the battery of the embodiment described above.

In a fifth aspect, the present application provides a processing method for an electrode assembly, the processing method comprising providing a cathode plate, an anode plate and a separator, wherein the separator is used for separating the cathode plate and the anode plate, the cathode plate, the separator and the anode plate are wound in a winding direction to form a bent region, the cathode plate is bent M times to form M bent parts in the bent region, a first attachment region is formed on an inner surface of an Nth-bend part of the cathode plate, and a second attachment region is formed on an outer surface of the Nth-bend part, wherein M and N are positive integers, M ≥ 2 and 1 ≤ N ≤ M; providing an ion blocking layer and a reinforcing layer; and attaching at least a part of the ion blocking layer to the first attachment region, wherein the ion blocking layer is used for preventing ions deintercalated from the first attachment region from being intercalated into the anode plate adjacent to the first attachment region during charging, and attaching at least a part of the reinforcing layer to the second attachment region, wherein the reinforcing layer is provided with ion exchange channels which are through holes provided in a thickness direction of the reinforcing layer.

In a sixth aspect, the present application provides a processing device for an electrode assembly, the processing device comprising a first provision device for providing a cathode plate, an anode plate and a separator, wherein the separator is used for separating the cathode plate and the anode plate, the cathode plate, the separator and the anode plate are wound in a winding direction to form a bent region, the cathode plate is bent M times to form M bent parts in the bent region, a first attachment region is formed on an inner surface of an Nth-bend part of the cathode plate, and a second attachment region is formed on an outer surface of the Nth-bend part, wherein M and N are positive integers, M ≥ 2 and 1 ≤ N ≤ M; a second provision device for providing an ion blocking layer and a reinforcing layer; and an assembly device for attaching at least a part of the ion blocking layer to the first attachment region, wherein the ion blocking layer is used for preventing ions deintercalated from the first attachment region from being intercalated into the anode plate adjacent to the first attachment region during charging and for attaching at least a part of the reinforcing layer to the second attachment region, wherein the reinforcing layer is provided with ion exchange channels which are through holes provided in a thickness direction of the reinforcing layer.

The aforementioned description is only an overview of the technical solutions of the embodiments of the present application. In order to more clearly understand the technical means of the embodiments of the present application to implement same according to the contents of the description, and in order to make the aforementioned and other objects, features and advantages of the embodiments of the present application more obvious and understandable, specific embodiments of the present application are exemplarily described below.

### Brief Description of the Drawings

In order to more clearly illustrate the technical solutions in the embodiments of the present application, the drawings to be used in the description of the embodiments of the present application will be described briefly below. It is obvious that the drawings in the following description are merely some embodiments of the present application. For those of ordinary skill in the art, other drawings can also be obtained according to these drawings without the inventive labor.
FIG. 1 is a schematic structural diagram of a vehicle provided in some embodiments of the present application;
FIG. 2 is a schematic exploded view of a battery provided in some embodiments of the present application;
FIG. 3 is a schematic structural diagram of the battery module shown in FIG. 2;
FIG. 4 is a schematic exploded view of a battery cell provided in some embodiments of the present application;
FIG. 5 is a schematic perspective structural diagram of an electrode assembly of some embodiments of the present application;
FIG. 6 is a schematic structural diagram of a cross section, in a direction perpendicular to a winding axis Z, of the electrode assembly of the embodiment shown in FIG. 5;
FIG. 7 is a schematic structural diagram of an anode plate of the electrode assembly of some embodiments of the present application;
FIG. 8 is a schematic structural diagram of a cathode plate of the electrode assembly of some embodiments of the present application;
FIG. 9 is a schematic structural diagram of a cross section, perpendicular to the winding axis, of an electrode assembly in a flat shape of an embodiment of the present application;
FIG. 10 is a schematic structural diagram of a cross section, perpendicular to the winding axis, of the electrode assembly in a flat shape of another embodiment of the present application;
FIG. 11 is a schematic structural diagram of a cross section, perpendicular to the winding axis, of the electrode assembly in a flat shape of another embodiment of the present application;
FIG. 12 is a schematic structural diagram of an inner surface of the cathode plate of the electrode assembly of some embodiments of the present application after being unwound in the winding direction;
FIG. 13 is a schematic structural diagram of an outer surface of the cathode plate of the electrode assembly of some embodiments of the present application after being unwound in the winding direction;
FIG. 14 is a schematic structural diagram of an outer surface of the cathode plate of an electrode assembly of another embodiment of the present application after being unwound in the winding direction;
FIG. 15 is a schematic structural diagram of a D-D cross section of an embodiment of the cathode plate of the electrode assembly shown in FIG. 13 of the present application;
FIG. 16 is a schematic structural diagram of a D-D cross section of another embodiment of the cathode plate of the electrode assembly shown in FIG. 13 of the present application;
FIG. 17 is a schematic structural diagram of a D-D cross section of another embodiment of the cathode plate of the electrode assembly shown in FIG. 13 of the present application;
FIG. 18 is a schematic structural diagram of a D-D cross section of another embodiment of the cathode plate of the electrode assembly shown in FIG. 13 of the present application;
FIG. 19 is a schematic flow diagram of a processing method for an electrode assembly of another embodiment of the present application; and
FIG. 20 is a schematic structural diagram of a processing device for an electrode assembly of another embodiment of the present application.

### Detailed Description of Embodiments

In order to make the objectives, technical solutions and advantages of embodiments of the present application clearer, the technical solutions in the embodiments of the present application will be described clearly and completely below in conjunction with the accompanying drawings in the embodiments of the present application. It is obvious that the embodiments described are some of, rather than all of, the embodiments of the present application. All the other embodiments obtained by those of ordinary skill in the art based on the embodiments of the present application without any creative effort shall fall within the scope of protection of the present application.

Unless otherwise defined, all technological and scientific terms used herein have the same meanings as those commonly understood by those skilled in the art to which the present application belongs. The terms used in the description of the present application herein are merely for the purpose of describing specific embodiments, but are not intended to limit the present application. The terms "comprising" and "having" and any variations thereof in the specification and the claims of the present application as well as the foregoing description of the accompanying drawings are intended to cover non-exclusive inclusions. The phrase "embodiment" mentioned to herein means that the specific features, structures and characteristics described in conjunction with the embodiment may be included in at least one of the embodiments of the present application. The phrase at various locations in the specification does not necessarily refer to the same embodiment, or an independent or alternative embodiment exclusive of another embodiment. Those skilled in the art understand explicitly or implicitly that an embodiment described herein may be combined with another embodiment.

The term "and/or" herein is merely a description of the associated relationship of associated objects, and indicates that three relationships may exist. For example, A and/or B may indicate that the three instances of A alone, A and B simultaneously, and B alone. In addition, the character "/" herein generally indicates an "or" relationship between the associated objects.

In the description of the present application, it should be understood that the orientation or positional relationships indicated by the terms "center", "longitudinal", "transverse", "length", "width", "thickness", "upper", "lower", "front", "rear", "left", "right", "vertical", "horizontal", "top", "bottom", "inner", "outer", "clockwise", "anticlockwise", "axial", "radial", "circumferential", etc. are based on the orientation or positional relationships shown in the accompanying drawings and are merely for ease of description of the present application and simplification of the description, rather than indicating or implying that the devices or elements referred to must have a specific orientation or be constructed and operated in a described orientation, and therefore cannot be construed as limiting the present application. In addition, the terms "first", "second" and the like in the description and the claims of the present application or in the above drawings are used to distinguish different objects, rather than to describe a specific order. Therefore, a feature defined by "first" or "second" may explicitly or implicitly include one or more features. In the description of the present application, the term "a plurality of" means two or more, unless otherwise specified.

In the description of the present application, it should be noted that unless otherwise explicitly specified and defined, the terms "mounting", "connecting" and "connection" should be understood in a broad sense, for example, they may be a fixed connection, a detachable connection, or an integrated connection; or may be a mechanical connection or an electrical connection; may be a direct connection, an indirect connection by means of an intermediate medium, or internal communication between two elements. For those of ordinary skill in the art, the specific meaning of the terms mentioned above in the present application can be construed according to specific circumstances.

In the present application, a battery cell may comprise a lithium-ion secondary battery cell, a lithium ion primary battery cell, a lithium-sulfur battery cell, a sodium-lithium ion battery cell, a sodium ion battery cell, a magnesium ion battery cell, or the like, which is not limited in the embodiments of the present application. The battery cell may be in a cylindrical, flat or cuboid shape or other shapes, which is not limited in the embodiments of the present application. The battery cell is generally classified into three types according to a packaging approach: a cylindrical battery cell, a cuboid battery cell, and a pouch battery cell, which is also not limited in the embodiments of the present application.

A battery mentioned in the embodiments of the present application refers to a single physical module comprising one or more battery cells to provide a higher voltage and capacity. For example, the battery mentioned in the present application may comprise a battery module, a battery pack, or the like. The battery generally comprises a case for packaging one or more battery cells. The case can prevent liquid or other foreign matters from affecting the charging or discharging of the battery cell.

The battery cell comprises an electrode assembly and an electrolyte, the electrode assembly comprising a cathode plate, an anode plate and a separator. The battery cell mainly works by relying on movement of metal ions between the cathode plate and the anode plate. The cathode plate comprises a cathode current collector and a cathode active material layer, wherein a surface of the cathode current collector is coated with the cathode active material layer. The cathode current collector comprises a cathode current-collecting part and a cathode portion protruding from the cathode current-collecting part. The cathode current-collecting part is coated with the cathode active material layer, at least a part of the cathode portion is not coated with the cathode active material layer, and the cathode portion is used as a cathode tab. By taking a lithium-ion battery as an example, the cathode current collector may be made of aluminum. The cathode active material layer comprises a cathode active material which may be lithium cobalt oxide, lithium iron phosphate, ternary lithium, lithium manganate or the like. The anode plate comprises an anode current collector and an anode active material layer, wherein a surface of the anode current collector is coated with the anode active material layer. The anode current collector comprises an anode current-collecting part and an anode portion protruding from the anode current-collecting part. The anode current-collecting part is coated with the anode active material layer, at least a part of the anode portion is not coated with the anode active material layer, and the anode portion is used as an anode tab. The anode current collector may be made of copper, and the anode active material layer comprises an anode active material which may be carbon, silicon or the like. In order to ensure that no fusing occurs when a large current passes, a plurality of cathode tabs are provided and stacked together, and a plurality of anode tabs are provided and stacked together. The separator may be made of polypropylene (PP), polyethylene (PE) or the like. In addition, the electrode assembly may be of a winding structure or a laminated structure, which is not limited in the embodiments of the present application.

When a lithium-ion battery cell is charged, lithium ions are deintercalated from the cathode active material layer and are intercalated into the anode active material layer, but some abnormal conditions may occur: for example, there is insufficient space for lithium intercalation in the anode active material layer, the resistance for lithium ions to be intercalated into the anode active material layer is too large, or lithium ions are deintercalated from the cathode active material layer too quickly, and the deintercalation lithium ions cannot be equally intercalated into the anode active material layer of the anode plate; the lithium ions that cannot be intercalated into the anode plate can only get electrons on the surface of the anode plate to form a lithium metal element. This phenomenon is called lithium precipitation. Lithium precipitation not only reduces the performance of the lithium-ion battery cell and greatly shortens the cycle life, but also limits the fast charge capacity of the lithium-ion battery cell. In addition, when lithium precipitation occurs in the lithium-ion battery cell, the deposited lithium metal is very active and can be reacted with the electrolyte solution at a low temperature, such that the initial temperature for heat self-generation of the battery cell is decreased and the heat self-generation rate is increased, which seriously harms the safety of the battery cell. Furthermore, when lithium precipitation is serious, the deintercalation lithium ions can form lithium crystals on the surface of the anode plate, and the lithium crystals easily pierce the separator, resulting in a risk of short circuits between the adjacent cathode and anode plates.

In the research and development process, the inventor finds that the electrode assembly of a winding structure is prone to lithium precipitation in the bent region thereof. After further research, the inventor finds that the main reason for lithium precipitation is that the cathode plate and the anode plate located in the bent region need to be bent, and the anode plate located inside the cathode plate is prone to having insufficient space for lithium intercalation, which may cause the number of lithium intercalation positions on the anode active material layer of the anode plate to be less than the number of lithium ions that can be provided by the cathode active material layer of the adjacent cathode plate, thereby leading to lithium precipitation. In addition, on the outer surface of the cathode plate in the bent region, the cathode plate is subjected to a large tensile force. As a result, the cathode active material layer breaks and sheds, the battery capacity and safety are affected, the current collector of the cathode plate may be exposed to result in a short circuit, or the current collector breaks at the position of bending.

In view of this, the embodiments of the present application provide a technical solution. In the technical solution, an electrode assembly comprises: a cathode plate, an anode plate and a separator, wherein the separator is used for separating the cathode plate and the anode plate, the cathode plate, the separator and the anode plate are wound in a winding direction to form a bent region, the cathode plate is bent M times to form M bent parts in the bent region, a first attachment region is formed on an inner surface of an Nth-bend part of the cathode plate, and a second attachment region is formed on an outer surface of the Nth-bend part, wherein M and N are positive integers, M ≥ 2 and 1 ≤ N ≤ M; an ion blocking layer, wherein at least a part of the ion blocking layer is attached to the first attachment region, and the ion blocking layer is used for preventing ions deintercalated from the first attachment region from being intercalated into the anode plate adjacent to the first attachment region during charging; and a reinforcing layer, wherein at least a part of the reinforcing layer is attached to the second attachment region, and the reinforcing layer is provided with ion exchange channels which are through holes provided in a thickness direction of the reinforcing layer. The electrode assembly with such a structure can reduce lithium precipitation, reduce risk of the shedding of the cathode active material of the cathode plate and the breakage the cathode plate and improve the capacity and safety of the battery cell.

The technical solution described in the embodiments of the present application is applicable to a battery and a power consuming device using the battery.

The power consuming device may be a vehicle, a mobile phone, a portable device, a notebook computer, a ship, a spacecraft, an electric toy, an electric tool, etc. The vehicle may be a fuel vehicle, a gas vehicle or a new-energy vehicle. The new-energy vehicle may be a battery electric vehicle, a hybrid vehicle, an extended-range vehicle or the like. The spacecraft includes an airplane, a rocket, an aerospace plane, a spaceship, etc. The electric toy includes a stationary or mobile electric toy, such as a game machine, an electric toy car, an electric toy ship, and an electric toy airplane. The electric tool includes a metal cutting electric tool, a grinding electric tool, an assembling electric tool, and a railway electric tool, such as an electric drill, an electric grinder, an electric wrench, an electric screwdriver, an electric hammer, an electric impact drill, a concrete vibrator, and an electric planer. The foregoing power consuming device is not specifically limited in the embodiments of the present application.

For ease of description, an example in which a power consuming device refers to a vehicle is used for description in the following embodiments.

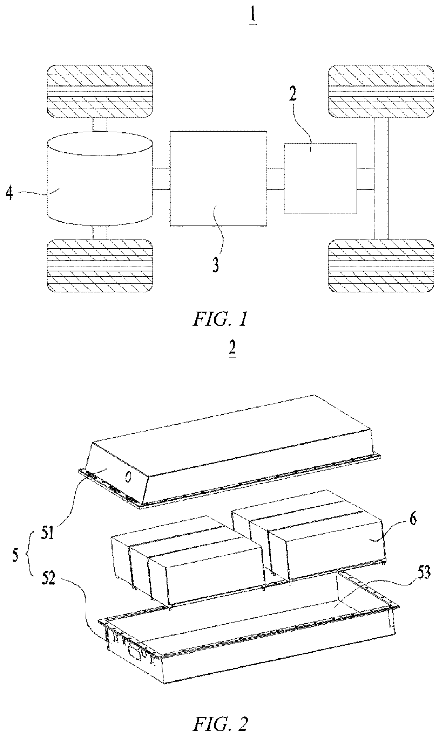

FIG. 1 is a schematic structural diagram of a vehicle provided in some embodiments of the present application. As shown in FIG. 1, a battery 2 is provided inside the vehicle 1, and the battery 2 may be provided at the bottom, head or tail of the vehicle 1. The battery 2 may be used for supplying power to the vehicle 1. For example, the battery 2 may serve as an operational power supply of the vehicle 1.

The vehicle 1 may further comprise a controller 3 and a motor 4. The controller 3 is used for controlling the battery 2 to supply power to the motor 4, for example, for meeting the working power requirements during the starting, navigation and traveling of the vehicle 1.

In some embodiments of the present application, the battery 2 can not only serve as an operational power supply of the vehicle 1, but also serve as a driving power supply of the vehicle 1, in place of or partially in place of a fuel oil or natural gas, to provide driving power for the vehicle 1.

FIG. 2 is a schematic exploded view of a battery provided in some embodiments of the present application. As shown in FIG. 2, the battery 2 comprises a case 5 and battery cells (not shown in FIG. 2), and the battery cells are received in the case 5.

The case 5 is used for receiving the battery cells, and the case 5 may be of various structures. In some embodiments, the case 5 may comprise a first case part 51 and a second case part 52, the first case part 51 and the second case part 52 cover each other, and the first case part 51 and the second case part 52 jointly define a receiving space 53 for receiving the battery cells. The second case part 52 may be of a hollow structure with one end opening, the first case part 51 is of a plate-like structure, and the first case part 51 covers the open side of the second case part 52 to form the case 5 with the receiving space 53. The first case part 51 and the second case part 52 each may also be of a hollow structure with one side opening, and the open side of the first case part 51 covers the open side of the second case part 52 to form the case 5 with the receiving space 53. Of course, the first case part 51 and the second case part 52 may be in various shapes such as a cylindrical shape and a cuboid shape.

To improve the sealing performance from the connection of the first case part 51 and the second case part 52, a seal, such as a sealant and a seal ring, may be provided between the first case part 51 and the second case part 52.

Assuming that the first case part 51 covers the top of the second case part 52, the first case part 51 may also be referred to as an upper case cover, and the second case part 52 may also be referred to as a lower case.

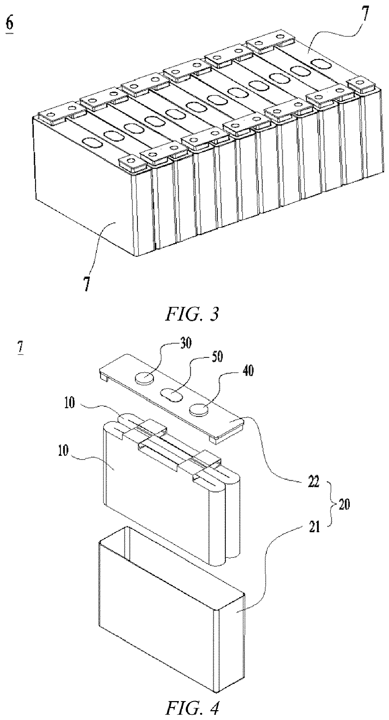

In the battery 2, one or more battery cells may be provided. If a plurality of battery cells are provided, the plurality of battery cells may be connected in series, in parallel or in series-parallel. The series-parallel connection means that some of the plurality of battery cells are connected in series and some are connected in parallel. The plurality of battery cells may be directly connected in series, in parallel or in series-parallel and a unit composed of the plurality of batteries are then received in the case 5. Of course, the plurality of battery cells may also be first connected in series, in parallel or in series-parallel to form a battery module 6. A plurality of battery modules 6 are connected in series, in parallel or in series-parallel to form a unit and then are received in the case 5. FIG. 3 is a schematic structural diagram of the battery module shown in FIG. 2. As shown in FIG. 3, in some embodiments, a plurality of battery cells 7 are provided, and the plurality of battery cells 7 are connected in series, in parallel or in series-parallel to form a battery module 6. A plurality of battery modules 6 are connected in series, in parallel or in series parallel to form a unit and then are received in the case.

The plurality of battery cells 7 in the battery module 6 may be electrically connected to each other by means of a busbar component, so as to achieve the series connection, parallel connection or series-parallel connection of the plurality of battery cells 7 in the battery module 6.

FIG. 4 is a schematic exploded view of a battery cell provided in some embodiments of the present application. As shown in FIG. 4, the battery cell 7 provided in the embodiments of the present application comprises an electrode assembly 10 and a shell 20, wherein the electrode assembly 10 is received in the shell 20.

In some embodiments, the shell 20 may also be used for receiving an electrolyte, such as an electrolyte solution. The shell 20 may be of various structures.

In some embodiments, the shell 20 may comprise a housing 21 and an end cover 22, the housing 21 is of a hollow structure with one side opening, and the end cover 22 covers the opening of the housing 21 and provide a sealed connection, so as to form a confined space for receiving the electrode assembly 10 and the electrolyte.

The housing 21 may be in various shapes such as a cylindrical shape and a cuboid shape. The shape of the housing 21 may be determined depending on the specific shape of the electrode assembly 10. For example, if the electrode assembly 10 is of a cylindrical structure, a cylindrical housing may be selected for use; and if the electrode assembly 10 is of a cuboid structure, a cuboid housing may be selected for use. Of course, the end cover 22 may also be of various structures. For example, the end cover 22 is of a plate-like structure, a hollow structure with one end opening and the like. By way of example, in FIG. 4, the housing 21 is of a cuboid structure, the end cover 22 is of a plate-like structure, and the end cover 22 covers the opening in the top of the housing 21.

In some embodiments, the battery cell 7 may further comprise a cathode electrode terminal 30, an anode electrode terminal 40 and a pressure relief mechanism 50, and the cathode electrode terminal 30, the anode electrode terminal 40 and the pressure relief mechanism 50 are all installed on the end cover 22. Both the cathode electrode terminal 30 and the anode electrode terminal 40 are used for being electrically connected with the electrode assembly 10, so as to output electric energy generated by the electrode assembly 10. The pressure relief mechanism 50 is used for relieving the pressure in the battery cell 7 when the internal pressure or temperature of the battery cell 7 reaches a preset value.

By way of example, the pressure relief mechanism 50 is located between the cathode electrode terminal 30 and the anode electrode terminal 40, and the pressure relief mechanism 50 may be a component such as an explosion-proof valve, a rupture disc, a gas valve, a pressure relief valve or a safety valve.

Of course, in other embodiments, the shell 20 may also be of other structures. For example, the shell 20 comprises a housing 21 and two end covers 22. The housing 21 is a hollow structure with the opposite two sides opening. Each of the end covers 22 covers one corresponding opening of the housing 21 to provides a sealed connection, thereby forming a confined space for receiving the electrode assembly 10 and the electrolyte. In this structure, the cathode electrode terminal 30 and the anode electrode terminal 40 may be installed on the same end cover 22, or may be installed on the different end covers 22. A pressure relief mechanism 50 may be installed on one of the end covers 22, or a pressure relief mechanism 50 may be installed on each of the two end covers 22.

It should be noted that, in the battery cell 7, one or more electrode assemblies 10 may be received in the shell 20. By way of example, in FIG. 4, two electrode assemblies 10 are provided.

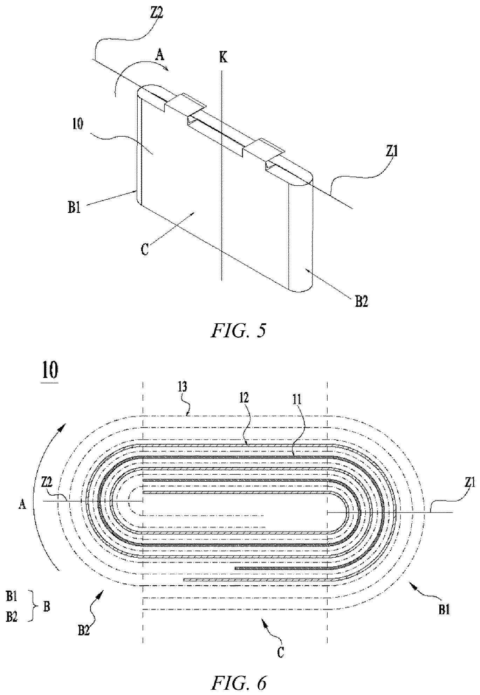

FIG. 5 is a schematic structural diagram of an electrode assembly provided in some embodiments of the present application. FIG. 6 is a schematic structural diagram of a cross section, in a direction perpendicular to a winding axis Z, of the electrode assembly in the embodiments of FIG. 5.

As shown in FIG. 5 and FIG. 6, the electrode assembly 10 in the embodiments of the present application comprises a cathode plate 11 and an anode plate 12. The cathode plate 11 and the anode plate 12 are wound in the winding direction A to form a wound structure. In the embodiments of the present application, the winding direction A is a direction in which the cathode plate 11 and the anode plate 12 are wound circumferentially from the inside to the outside. In FIG. 5, the winding direction A is the clockwise direction.

In some embodiments, the electrode assembly 10 further comprises a separator 13. The separator 13 is used for separating the cathode plate 11 and the anode plate 12, so as to reduce a risk of a short circuit between the cathode plate 11 and the anode plate 12. The separator 13 has a large number of through micropores that ensure the free passage of electrolyte ions, and has good permeability to lithium ions, such that the separator 13 substantially cannot block the lithium ions from passing through. By way of example, the separator 13 may be made of polypropylene (PP), polyethylene (PE) or the like.

The cathode plate 11, the anode plate 12 and the separator 13 are all of a strip-shaped structure. In the embodiments of the present application, the cathode plate 11, the separator 13 and the anode plate 12 may be stacked in sequence and then wound for more than two circles to form the electrode assembly 10.

The electrode assembly 10 may be in various shapes. For example, the electrode assembly 10 may be in a cylindrical, flat or prismoid (e.g., a triangular prism, a quadrangular prism or a hexagonal prism) shape or other shapes.

In some embodiments, the wound structure comprises a bent region B, and the bent region B comprises a first bent region body B1 and a second bent region body B2. The cathode plate 11 and the anode plate 12 each comprise a plurality of bent parts located in the bent region B. The bent region B is a region where the electrode assembly 10 has bent structures. The portion (i.e., the bent part of the cathode plate 11), located in the bent region B, of the cathode plate 11 and the portion (i.e., the bent part of the anode plate 12), located in the bent region B, of the anode plate 12 are both bent. By way of example, the bent part of the cathode plate 11 and the bent part of the anode plate 12 are generally bent into an arc shape.

By way of example, in the bent region B, the bent part of the cathode plate 11 and the bent part of the anode plate 12 are alternately arranged. That is, in the bent region B, a bent part of the anode plate 12, a bent part of the cathode plate 11, a bent part of the anode plate 12... are arranged in sequence. Optionally, the innermost bent part of the cathode plate 11 is located outside the innermost bent part of the anode plate 12.

In some embodiments, the electrode assembly 10 is in a flat shape. By way of example, the wound structure further comprises a flat region C connected with the bent region B. The cathode plate 11 and the anode plate 12 each comprise a plurality of flat parts located in the flat region C. The flat region C is a region where the electrode assembly 10 has a flat structure. Optionally, two bent region bodies of the bent region B comprise two ends connected with two ends of the flat region C, respectively.

The portion (i.e., the flat part of the cathode plate 11), located in the flat region C, of the cathode plate 11 and the portion (i.e., the flat part of the anode plate 12), located in the flat region C, of the anode plate 12 are substantially flat. Both the surface of the flat part of the cathode plate 11 and the surface of the flat part of the anode plate 12 are generally flat.

As shown in FIG. 6, the first bent region body B1 has a center line Z1, and the second bent region body B2 has a center line Z2. The center lines Z1 and Z2 are parallel to the winding axis K of the electrode assembly and extend in the length direction of the electrode assembly. In the width direction of the electrode assembly, the center line Z1 divides the first bent region body B 1 into two portions and the center line Z2 divides the second bent region body B2 into two portions.

The separator 13 has electronic insulation and is used for separating the cathode plate 11 and the anode plate 12 adjacent to each other to prevent the cathode plate 11 and the anode plate 12 adjacent to each other from being short-circuited. The separator 13 has a large number of through micropores to enable the free passage of the electrolyte solution and the ions, and has good permeability to lithium ions, such that the separator 13 substantially cannot block the lithium ions from passing through. For example, the separator 13 comprises a separator base layer and a functional layer located on a surface of the separator base layer. The separator base layer comprises at least one of polypropylene, polyethylene, an ethylene-propylene copolymer, polybutylene terephthalate, etc., and the functional layer may be a mixture layer of ceramic oxide and a binder.

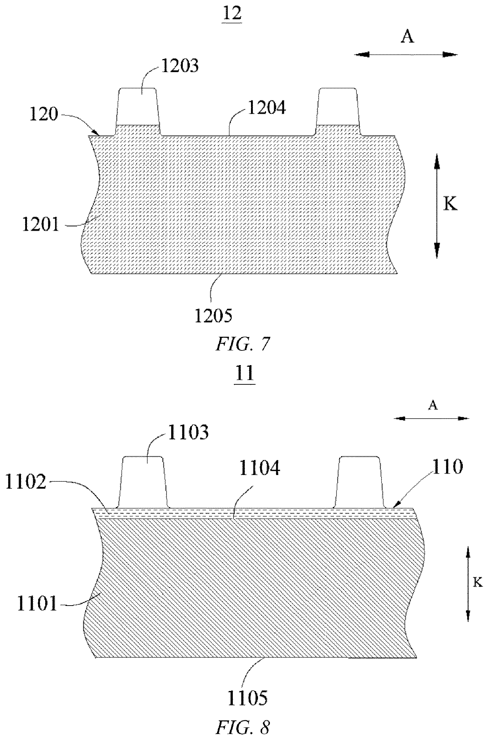

The structure of the anode plate 12 may be as shown in FIG. 7 which is a schematic structural diagram of an anode plate of another embodiment of the present application. The anode plate 12 comprises an anode body part 120 and anode tab parts 1203 extending outwards along the winding axis K from the anode body part 120. An anode active material layer 1201 is provided in at least a part of a region along the winding axis K on the surface of the anode body part 120. The anode active material layer 1201 is used for being coated with an anode active material, and the anode active material may be graphite or silicon.

In another embodiment of the present application, not only an anode active material layer 1201 is provided in a part of the region on the surface of the anode body part 120, but also an anode active material layer 1201 is provided in the root regions, close to the anode body part 120, on the surfaces of the anode tab parts 1203. That is, the anode active material layer 1201 is provided in a part of the regions of the anode tab parts 1203.

In another embodiment of the present application, as shown in FIG. 7, the anode active material layer 1201 covers the entire surface of the anode body part 120 along the winding axis K.

FIG. 8 is a schematic structural diagram of a cathode plate of another embodiment of the present application.

The cathode plate 11 comprises a cathode body part 110 and at least one cathode tab 1103 extending outwards from the cathode body part 110 along the winding axis K. A cathode active material layer 1101 is provided in at least a part of region on the surface of the cathode body part 110, and the cathode active material layer 1101 may be coated with a cathode active material. For example, the cathode active material may be a ternary material, lithium manganate or lithium iron phosphate.

In another embodiment of the present application, the surface of the cathode body part 110 further comprises a first insulation layer coating region 1102 adjacent to the cathode active material layer 1101. The first insulation layer coating region 1102 is located on the side, adjacent to the cathode tab 1103, of the cathode active material layer 1101, and the first insulation layer coating region 1102 is used for being coated with an insulating material, so as to isolate the cathode active material layer 1101 and the cathode tabs 1103 in an insulated manner. The two surfaces of a current collector of the cathode plate 11 have cathode active material layers 1101, and the cathode tab 1103 is a part of the current collector of the cathode plate 11, wherein the current collector may be made of aluminum. For example, the cathode active material layer 1101 and the first insulation layer coating region 1102 are distributed at two ends on the surface of the cathode body part 110 in the direction of the winding axis K, and the cathode tabs 1103 and the first insulation layer coating region 1102 are located at the same end of the cathode body part 110.

In another embodiment of the present application, the cathode active material layer 1101 and the first insulation layer coating region 1102 are two substantially parallel regions on the surface of the cathode body part 110, and are distributed in two layers on the surface of the cathode body part 110 along the winding axis K.

In another embodiment of the present application, the first insulation layer coating region 1102 may be located on the portion, interconnected with the cathode tabs 1103, of the cathode body part 110. For example, the first insulation layer coating region 1102 is located on the portion, interconnected with the cathode tabs 1103, on the surface of the cathode body part 110 and is used for separating the surfaces of the cathode tabs 1103 and the cathode active material layer 1101. In another embodiment of the present application, not only the first insulation layer coating region 1102 is provided on the surface of the cathode body part 110, but also a second insulation layer coating region is provided in the root regions, close to the cathode body part 110, of the cathode tabs 1103. The second insulation layer coating region is used for being coated with an insulating material.

In another embodiment of the present application, the surface of the first insulation layer coating region 1102 is coated with an insulating material that comprises an inorganic filler and a binder. The inorganic filler includes one or more of boehmite, aluminum oxide, magnesium oxide, titanium oxide, zirconium oxide, silicon dioxide, silicon carbide, boron carbide, calcium carbonate, aluminum silicate, calcium silicate, potassium titanate, and barium sulfate. The binder includes one or more of polyvinylidene fluoride, polyacrylonitrile, polyacrylic acid, polyacrylate, polyacrylic acid-acrylate, polyacrylonitrile-acrylic acid, and polyacrylonitrile-acrylate.

In another embodiment of the present application, each cathode plate 11 may comprise one, two or more cathode tabs 1103. When each cathode plate 11 comprises two or more cathode tabs 1103, all the cathode tabs 1103 are located on the same side of the cathode plate 11 along the winding axis K.

When the cathode plate 1 and the anode plate 2 are stacked on each other, the two ends of the anode active material layer 1201 of the anode plate 2 along the winding axis K both extend beyond the corresponding ends of the cathode active material layer 1101 of the adjacent cathode plate 1, such that the electrode assembly may have good energy density. For example, the two ends of the anode active material layer 1201 along the winding axis K are respectively a first end 1204 and a second end 1205, and the two ends of the cathode active material layer 1101 along the winding axis K are respectively a third end 1104 and a fourth end 1105. The first end 1204 of the anode active material layer 1201 and the third end 1104 of the cathode active material layer 1101 are located on the same side of the electrode assembly along the winding axis K, and the first end 1204 of the anode active material layer 1201 extends beyond the third end 1104 of the cathode active material layer 1101 along the winding axis K. The second end 1205 of the anode active material layer 1201 and the fourth end 1105 of the cathode active material layer 1101 are located on the other side of the electrode assembly 10 along the winding axis K, and the second end 1205 of the anode active material layer 1201 extends beyond the fourth end 1104 of the cathode active material layer 1105 along the winding axis K.

The two ends of the anode active material layer 1201 along the winding axis K may extend beyond the corresponding ends of the cathode active material layer 1101 by the same or different sizes, for example, by the size ranging from 0.2 millimeter to 5 millimeters.

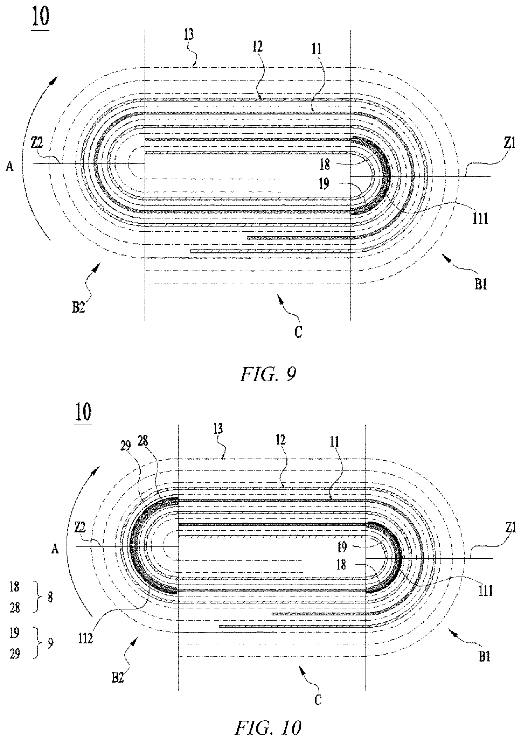

FIG. 9 is a schematic structural diagram of a cross section, perpendicular to the winding axis, of an electrode assembly in a flat shape of an embodiment of the present application.

The electrode assembly 10 in this embodiment comprises: a cathode plate 11, an anode plate 12 and a separator 13, wherein the separator 13 is used for separating the cathode plate 11 and the anode plate 12, the cathode plate 11, the separator 13 and the anode plate 12 are wound in the winding direction A to form a bent region B, the cathode plate 11 is bent M times to form M bent parts in the bent region, a first attachment region is formed on the inner surface 11U of the Nth-bend part of the cathode plate 11, and a second attachment region is formed on the outer surface 11V of the Nth-bend part, wherein M and N are positive integers, M ≥ 2 and 1 ≤ N ≤ M; an ion blocking layer 8, wherein at least a part of the ion blocking layer is attached to the first attachment region, and the ion blocking layer 8 is used for preventing ions deintercalated from the first attachment region from being intercalated into the anode plate 12 adjacent to the first attachment region during charging; and a reinforcing layer 9, wherein at least a part of the reinforcing layer is attached to the second attachment region, and the reinforcing layer 9 is provided with ion exchange channels.

In some embodiments, the ion exchange channels are through holes 90 provided in a thickness direction of the reinforcing layer 9.

In some embodiments, the inner surface 11U and the outer surface 11V of the cathode plate 11 are each provided with a cathode active material layer 1101. A first attachment region is formed on the cathode active material layer 1101 on the inner surface 11U of the Nth-bend part of the cathode plate 11, and a second attachment region is formed on the cathode active material layer 1101 on the outer surface 11V of the Nth-bend part. The ion blocking layer 8 is used for preventing ions deintercalated from the first attachment region from being intercalated into the anode plate 12 adjacent to the first attachment region during charging. The ion exchange channels in the reinforcing layer 9 allows at least a part of the ions deintercalated from the second attachment region to be intercalated into the anode plate 12 adjacent to the second attachment region during charging.

By arranging the ion blocking layer 8 in the first attachment region on the inner surface 11U of the Nth-bend part of the cathode plate 11 in the bent region B, lithium precipitation can be effectively reduced. At least a part of ions deintercalated from the cathode active material layer 1101 in the first attachment region are blocked by the ion blocking layer 8 during charging, such that the ions blocked by the ion blocking layer 8 cannot be intercalated into the anode plate 12 adjacent to the first attachment region, thereby reducing lithium precipitation. The reinforcing layer 9 can provide reinforcement for the second attachment region on the outer surface 11V of the cathode plate 11 to reduce the breakage of the second attachment region of the cathode plate 11 or the shedding of the cathode active material, thereby improving the safety of the battery cell 7. In addition, the ion exchange channels of the reinforcing layer 9 allow at least a part of the ions deintercalated from the second attachment region to be intercalated into the anode plate 12 adjacent to the second attachment region, such that the at least a part of the ions from the second attachment region can complete normal deintercalation, intercalation and shuttling and the capacity of the battery cell 7 can be fully utilized, thereby improving the safety of the battery cell 7 while improving the capacity of the battery cell 7.

In some embodiments, the inner surface 11U of the cathode plate 11 refers to the surface, facing the winding axis K, of the cathode plate 11; and the outer surface 11V of the cathode plate refers to the surface, away from the winding axis K, of the cathode plate 11. In some embodiments, forming the first attachment region on the cathode active material layer 1101 on the inner surface 11U of the Nth-bend part of the cathode plate 11 means that the first attachment region is formed on the cathode active material layer 1101 on the inner surface 11U of one or more of the first-bend part to the Mth-bend part of the cathode plate 11. The Nth-bend part refers to the bent part formed in the Nth bending after the wound structure is bent once, twice...N times in the winding direction A in an unwound state.

In some embodiments, attachment refers to adhesion, coating or spray-coating.

The first attachment region refers to a region covered when the ion blocking layer 8 is attached to the inner surface 11U of the cathode plate 11. The second attachment region refers to a region covered when the reinforcing layer 9 is attached to the outer surface 11V of the cathode plate 11.

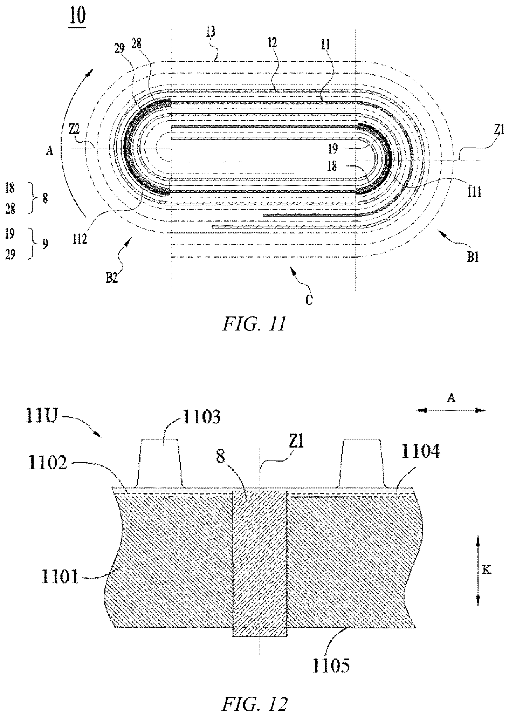

FIG. 9 is a schematic structural diagram of a cross section, perpendicular to the winding axis K, of an electrode assembly in a flat shape of an embodiment of the present application. FIG. 10 is a schematic structural diagram of a cross section, perpendicular to the winding axis K, of another electrode assembly in a flat shape of another embodiment of the present application; FIG. 11 is a schematic structural diagram of a cross section, perpendicular to the winding axis K, of another electrode assembly in a flat shape of another embodiment of the present application.

In some embodiments, the Nth-bend part comprises a first-bend part and/or a second-bend part.

In the embodiment shown in FIG. 9, the Nth-bend part comprises a first-bend part 111 of the cathode plate 11. A first ion blocking layer 18 is provided in the first attachment region on the inner surface 11U of the first-bend part 111, and a first reinforcing layer 19 is provided in the second attachment region on the outer surface 11V of the first-bend part 111.

In the embodiment shown in FIG. 10 , the Nth-bend part comprises a first-bend part 111 and a second-bend part 112 of the cathode plate 11. A first ion blocking layer 18 is provided in the first attachment region on the inner surface 11U of the first-bend part 111, and a first reinforcing layer 19 is provided in the first attachment region on the outer surface 11V of the first-bend part 111. A second ion blocking layer 28 is provided in the first attachment region on the inner surface 11U of the second-bend part 112, and a second reinforcing layer 29 is provided in the second attachment region on the outer surface 11V of the second-bend part 112.

The Nth-bend part is not limited to the first-bend part and the second-bend part and may further comprise third-bend, fourth-bend, fifth-bend and sixth-bend parts. In some embodiments, each of the first-bend part to the Mth-bend part can be provided with an ion blocking layers 8 and a reinforcing layer 9.

In these embodiments, by providing the ion blocking layer 8 and the reinforcing layer 9 on the first-bend part 111 and/or the second-bend part 112 of the cathode plate 11 in the bent region B, the lithium precipitation of the anode plate 12 near the inner surface 11U of the first-bend part 111 and/or the second-bend part 112 of the cathode plate 11 can be reduced, and the breakage of the outer surface 11V of the first-bend part 111 and/or the second-bend part 112 of the cathode plate 11 or the shedding of the cathode active material can be reduced, thereby improving the safety of the battery cell 7. The capacity loss of the battery cell 7 can also be reduced.

In some embodiments, the electrode assembly 10 has a flat region C connected with the bent region B. One end, extending in the winding direction A, of the ion blocking layer 8 and one end, extending in the winding direction, of the reinforcing layer 9 are located in the flat region C, and the other end of the ion blocking layer and the other end of the reinforcing layer are located in the bent region B; or the two ends, extending in the winding direction A, of the ion blocking layer 8 and the two ends, extending in the winding direction, of the reinforcing layer 9 are located in the flat region C. Since there may be errors in attaching the ion blocking layer 8 and the reinforcing layer 9, if the ion blocking layer 8 and the reinforcing layer 9 are too short, the portion, located in the bent region B, of the cathode plate 11 may not be accurately covered. One or two ends of each of the ion blocking layer 8 and the reinforcing layer 9 are located in the flat region C, which can expand the coverage area of the ion blocking layer 8 and the reinforcing layer 9 and ensure that the ion blocking layer 8 and the reinforcing layer 9 can be accurately attached to the Nth-bend part of the cathode plate 11.

In the embodiment shown in FIG. 11, the two ends, extending in the winding direction A, of each of the ion blocking layer 8 and the reinforcing layer 9 are all located in the flat region C. It thus is ensured that the ion blocking layer 8 and the reinforcing layer 9 can be accurately attached to the Nth-bend part of the cathode plate 11.

FIG. 12 is a schematic structural diagram of the inner surface 11U of the cathode plate of the electrode assembly of some embodiments of the present application after being unwound in the winding direction.

In these embodiments, an ion blocking layer 8 is provided in the first attachment region on the inner surface 11U of the Nth-bend part of the cathode plate 11. In the winding direction A, the ion blocking layer 8 covers the center line of the bent region B. As shown in the embodiment of FIG. 11, a first ion blocking layer 18 covers the center line Z1 of the first bent region body B 1, and a second ion blocking layer 28 covers the center line Z2 of the second bent region body B2. In the winding direction A, the two ends of the ion blocking layer 8 may be both located in the bent region B; or one end, extending in the winding direction A, of the ion blocking layer 8 is located in the flat region C, and the other end is located in the bent region B; or the two ends, extending in the winding direction A, of the ion blocking layer 8 are both located in the flat region C.

In this embodiment, in the direction of the winding axis K, one end of the ion blocking layer 8 extends beyond the third end 1104 of the cathode active material layer 1101 and is connected with the first insulation layer coating region 1102; and the other end of the ion blocking layer 8 extends to at least the fourth end 1105 of the cathode active material layer 1101. In this way, it can be ensured that the ion blocking layer 8 covers the entire cathode active material layer 1101 in the direction of the winding axis K, which can effectively avoid lithium precipitation. In some embodiments, in the direction of the winding axis K, the second end of the ion blocking layer 8 may also extend beyond the fourth end 1105 of the cathode active material layer 1101. In the process of attaching the ion blocking layer 8 to the cathode plate 11, the length of the ion blocking layer 8 may change due to cutting and tensile stress, which results in a risk that the ion blocking layer 8 cannot completely cover the cathode active material layer 1101 on the inner surface 11U of the Nth-bend part of the cathode plate 11. By allowing the ion blocking layer 8 to protrude from the first attachment region in the direction of the winding axis K, the length of the ion blocking layer 8 can be increased, and the risk that the ion blocking layer 8 cannot effectively cover the cathode active material layer 1101 on the inner surface 11U of the Nth-bend part of the cathode plate 11 can be avoided.

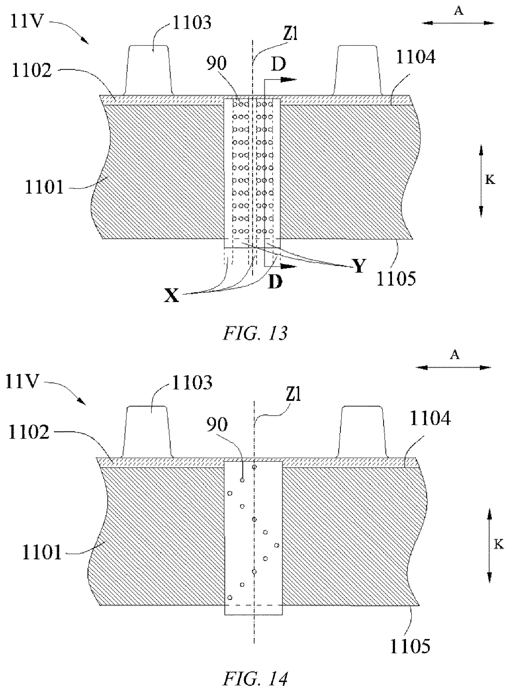

FIG. 13 is a schematic structural diagram of an outer surface of the cathode plate of the electrode assembly of some embodiments of the present application after being unwound in the winding direction. FIG. 14 is a schematic structural diagram of an outer surface of the cathode plate of an electrode assembly of another embodiment of the present application after being unwound in the winding direction.

As shown in FIG. 13, in some embodiments of the present application, a reinforcing layer 9 is provided in the second attachment region on the outer surface 11V of the Nth-bend part of the cathode plate 11. In the winding direction A, the reinforcing layer 9 covers the center line of the bent region B. As shown in the embodiment of FIG. 11, the first reinforcing layer 19 covers the center line Z1 of the first bent region body B1, and the second reinforcing layer 19 covers the center line Z2 of the second bent region body B2. In the winding direction A, the two ends of the reinforcing layer 9 may be both located in the bent region B; or one end, extending in the winding direction A, of the reinforcing layer 9 is located in the flat region C, and the other end of the reinforcing layer is located in the bent region B; or the two ends, extending in the winding direction A, of the reinforcing layer 9 are both located in the flat region C.

In this embodiment, in the direction of the winding axis K, one end of the reinforcing layer 9 extends beyond the third end 1104 of the cathode active material layer 1101 and is connected with the first insulation layer coating region 1102; and the other end of the reinforcing layer 9 extends to at least the fourth end 1105 of the cathode active material layer 1101. In this way, it can be ensured that the reinforcing layer 9 covers the entire cathode active material layer 1101 in the direction of the winding axis K, which can effectively prevent the cathode active material on the outer surface 11V from shedding and breaking. In some embodiments, in the direction of the winding axis K, the second end of the reinforcing layer 9 may also extend beyond the fourth end 1105 of the cathode active material layer 1101. In the process of attaching the reinforcing layer 9 to the cathode plate 11, the length of the reinforcing layer 9 may change due to cutting and tensile stress, which results in a risk that the reinforcing layer 9 cannot completely cover the cathode active material layer 1101 on the outer surface 11V of the Nth-bend part of the cathode plate 11. By allowing the reinforcing layer 9 to protrude from the first attachment region in the direction of the winding axis K, the length of the reinforcing layer 9 can be increased, and the risk that the reinforcing layer 9 cannot effectively cover the cathode active material layer 1101 on the outer surface 11V of the Nth-bend part of the cathode plate 11 can be avoided.

In some embodiments, ion exchange channels are formed in the reinforcing layer 9, and the ion exchange channels are through holes 90 that are provided in the thickness direction of the reinforcing layer 9 and allow the ions to pass through. The through holes 90 are used for the ions to pass through, which is conductive to the release of the electrolyte solution and the conduction and diffusion of the ions and is conductive to improving the capacity and cycle performance of the battery cell 7 and prolonging the service life of the battery cell 7.

In some embodiments shown in FIG. 13, in the winding direction, adsorption regions X and perforated regions Y are arranged on the reinforcing layer 9, at least a part of the through holes 90 are distributed in the perforated regions Y, and the porosity of the adsorption regions X is smaller than that of the perforated regions Y.

In these embodiments, the adsorption regions X and the perforated regions Y are arranged on the reinforcing layer 9, at least a part of the through holes 90 are distributed in the perforated regions Y, and the perforated regions Y are used for the ions to pass through, which is conductive to the release of the electrolyte solution and the conduction and diffusion of the ions and is conductive to improving the capacity and cycle performance of the battery cell and prolonging the service life of the battery cell. In addition, the porosity of the adsorption regions X is smaller than that of the perforated regions, which is conducive to installing the reinforcing layer 9 on the cathode plate 11 by using a vacuum adsorption apparatus for adsorption to the adsorption regions X in the production of the electrode assembly 7. The small porosity of the adsorption region X can reduce the impact on the vacuum adsorption operation. The porosity refers to the ratio of the total volume of all interconnected pores within a bulk material to the total volume of the bulk material.

The through holes 90 may be a plurality of holes uniformly or non-uniformly distributed in the perforated regions Y. For example, the through holes 90 may be arranged in an array in the perforated regions Y. A small quantity of holes can be formed in the adsorption regions X, which is more conducive to the release of the electrolyte solution and the conduction and diffusion of the ions; and the adsorption regions X may not be perforated, such that the adsorption regions have good adsorption performance. The perforated regions Y and the adsorption regions X are alternately arranged in the winding direction A. As shown in the embodiments of FIG. 13, two perforated regions Y are provided on the reinforcing layer 9, and three adsorption regions X are arranged between and on two sides of the two perforated regions Y. In some embodiments, the other end of the reinforcing layer 9 extends beyond the fourth end 1105 of the cathode active material layer 1101, and the perforated regions Y may or may not be perforated in the extending portion of the reinforcing layer 9.

In other embodiments shown in FIG. 14, in the direction of the winding axis K of the electrode assembly 7, the through holes 90 are distributed in the reinforcing layer 9 in a broken line or a curved line.

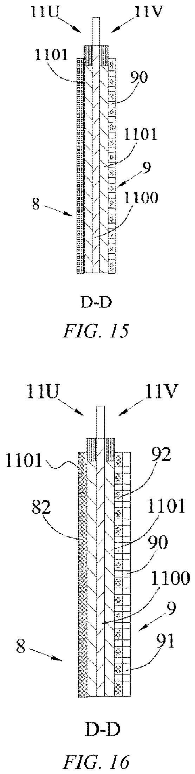

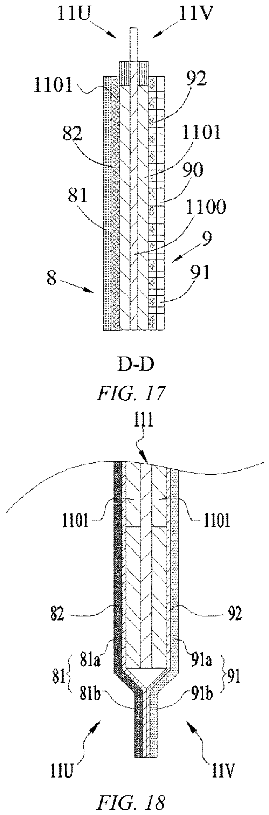

In these embodiments, the through holes 90 are distributed on the reinforcing layer 9 in a broken line or a curved line, so that the through holes 90 are distributed in both the winding direction A and the direction of the winding axis K of the reinforcing layer 9, and the reinforcing layer 9 can achieve the release of the electrolyte solution and the conduction and diffusion of the ions in both the winding direction A and the direction of the winding axis K, which is conductive to improving the cycle performance of the battery and prolonging service life. In addition, the broken line or curved line makes the porosity of the middle region in the winding direction of the reinforcing layer 9 greater than the porosity of the two sides of the reinforcing layer, which is conductive to forming adsorption regions on two sides of the reinforcing layer 9. FIG. 15 is a schematic structural diagram of a D-D cross section of an embodiment of the cathode plate of the electrode assembly shown in FIG. 13 of the present application. FIG. 16 is a schematic structural diagram of a D-D cross section of another embodiment of the cathode plate of the electrode assembly shown in FIG. 13 of the present application. FIG. 17 is a schematic structural diagram of a D-D cross section of another embodiment of the cathode plate of the electrode assembly shown in FIG. 13 of the present application. FIG. 18 is a schematic structural diagram of a D-D cross section of another embodiment of the cathode plate of the electrode assembly shown in FIG. 13 of the present application.

As shown in FIG. 15, in some embodiments of the present application, the ion blocking layer 8 and the reinforcing layer 9 are provided on the inner surface 11U and outer surface 11V of the Nth-bend part of the cathode plate 11, respectively.

As shown in FIG. 16, in some embodiments of the present application, the ion blocking layer 8 comprises a first binding layer 82 attached to the first attachment region. The reinforcing layer 9 comprises a reinforcing base layer 91 and a second binding layer 92, and the reinforcing base layer 91 is attached to the second attachment region by means of the second binding layer 92.

In some embodiments, the first binding layer 82 and/or the second binding layer 92 may be made of a material including one or a combination of an acrylic acid-acrylate copolymer, a butadiene-styrene copolymer, a styrene-acrylic acid copolymer, a styrene-acrylate copolymer, an ethylene-vinyl acetate copolymer, an acrylic acid grafted polyethylene, a maleic anhydride grafted polyethylene, an acrylic acid grafted polypropylene, a maleic anhydride grafted polypropylene, polyvinylidene fluoride, carboxymethyl cellulose, polyimide, polyetherimide, polyethylene terephthalate, a styrene-isoprene-styrene copolymer (rubber), an ethylene-vinyl acetate copolymer bisphenol A epoxy resin, an ethylene-vinyl acetate copolymer bisphenol F epoxy resin, a glyceryl ether epoxy resin, a glyceryl ester epoxy resin, a silicone resin, polyurethane and a styrene-isoprene-styrene copolymer. The first binding layer and the second binding layer may be made of the same material or different materials. The first binding layer 82 and the second binding layer 92 may be an adhesive.

In some embodiments, the reinforcing base layer 91 may be made of a material including one or a combination of polyvinyl chloride, polyethylene, polypropylene, polyvinylidene fluoride, a hexafluoropropylene-vinylidene fluoride copolymer, a tetrafluoropropylene-vinylidene fluoride copolymer, a trifluorochloropropylene-vinylidene fluoride copolymer, polyethylene terephthalate, polyimide, polyetherimide, polycarbonate, polystyrene, polyphenylene sulfide, polyvinylidene fluoride or a copolymer thereof, polyarylate, fibers, nylon and non-woven fabrics. The reinforcing base layer 91 may be an adhesive tape.

In the embodiments shown in FIG. 16 and FIG. 17, the reinforcing layer 9 is provided with through holes 90 allowing the ions to pass through, and the through holes 90 penetrate through the reinforcing base layer 91 and the second binding layer 92.

The second binding layer 92 can maintain the reinforcing layer on the outer surface of the cathode plate 11, and the second binding layer 92 can also store and maintain the electrolyte solution on the surface of the cathode plate 11 to replenish the electrolytic solution consumed in the cycle, which is conducive to the conduction and diffusion of the ions, thereby improving the performance of the battery cell. The through holes 90 penetrate through the reinforcing base layer 91 and the second binding layer 92, such that the ion exchange channels can penetrate through the reinforcing base layer 91 and the second binding layer 92, which is conducive to the release of the electrolyte solution and the conduction and diffusion of the ions and is conductive to improving the capacity and cycle performance of the battery cell 7 and prolonging the service life of the battery cell 7. The second binding layer 92 has a certain fluidity and thus easily moves and deforms on the surface of the cathode plate 11, which further affects the distribution uniformity of the electrolyte solution. The reinforcing base layer 91 can inhibit the movement and deformation of the second binding layer 92 and uniformly maintain the second binding layer 92 on the surface of the cathode plate 11 while allowing the ions to flow, such that the electrolyte solution can be stably maintained on the surface of the cathode plate 11 for a long time, which is conductive to improving the cycle performance of the battery cell 7 and prolonging the service life.

As shown in FIG. 17, in other embodiments of the present application, the ion blocking layer 8 comprises a blocking base layer 81 and a first binding layer 82, and the blocking base layer 81 is attached to the first attachment region by means of the first binding layer 82. The reinforcing layer 9 comprises a reinforcing base layer 91 and a second binding layer 92, and the reinforcing base layer 91 is attached to the second attachment region by means of the second binding layer 92.

In these embodiments, the blocking base layer 81 may be made of a material including one or a combination of polyvinyl chloride, polyethylene, polypropylene, polyvinylidene fluoride, a hexafluoropropylene-vinylidene fluoride copolymer, a tetrafluoropropylene-vinylidene fluoride copolymer, a trifluorochloropropylene-vinylidene fluoride copolymer, polyethylene terephthalate, polyimide, polyetherimide, polycarbonate, polystyrene, polyphenylene sulfide, polyvinylidene fluoride or a copolymer thereof, polyarylate, fibers, nylon and non-woven fabrics. The blocking base layer 81 may be adhesive tape.

For the materials of the first binding layer 82, the second binding layer 92 and the reinforcing base layer 91, reference can be made to the above embodiments.

As shown in FIG. 18, in other embodiments, the blocking base layer 81 comprises a first body part 81a and a first extension part 81b connected with the first body part 81a. The first binding layer 82 is used for binding at least a part of the first body part 81a to the first attachment region, and the first extension part 81b protrudes from the first attachment region in the direction of the winding axis K of the electrode assembly 10. The reinforcing base layer 91 comprises a second body part 91a and a second extension part 91b connected with the second body part 91a. The second binding layer 92 is used for binding at least a part of the second body part 91a to the second attachment region, and the second extension part 91b protrudes from the second attachment region in the direction of the winding axis K. The direction of the winding axis K is perpendicular to the winding direction A. The first extension part 81b and the second extension part 91b are connected by means of the first binding layer 82 and/or the second binding layer 92.

In these embodiments, in the process of attaching the ion blocking layer 8 and the reinforcing layer 9 to the cathode plate 11, the lengths of the ion blocking layer 8 and the reinforcing layer 9 may change due to cutting and tensile stress, which results in a risk that the ion blocking layer 8 and the reinforcing layer 9 cannot completely cover the cathode active material layer 1101 on the inner surface 11U and outer surface 11V of the Nth-bend part of the cathode plate 11. By providing the first extension part 81b, which protrudes from the first attachment region in the direction of the winding axis K, on the blocking base layer 81 and providing a second extension part 91b, which protrudes from the second attachment region in the direction of the winding axis K, on the reinforcing base layer 91, the lengths of the ion blocking layer 8 and the reinforcing layer 9 can be increased, and the risk that the ion blocking layer 8 and the reinforcing layer 9 cannot effectively cover the cathode active material layer 1101 on the inner surface 11U and outer surface 11V of the Nth-bend part of the cathode plate 11 is avoided. If the ion blocking layer 8 cannot effectively cover the cathode active material layer 1101 on the inner surface 11U, there is a risk of lithium precipitation. If the reinforcing layer 9 cannot effectively cover the cathode active material layer 1101 on the outer surface 11V, the cathode plate may be broken or the cathode active material may be shed.

In addition, the first binding layer 82 and the second binding layer 92 have stickiness and may stick to the winding equipment in the production process of the electrode assembly 10, which leads to unfavorable states of the ion blocking layer 8 and the reinforcing layer 9, such as shedding and upwarp, and thus results in the failure of the ion blocking layer 8 and the reinforcing layer 9 or damages the structure of the electrode assembly. By connecting the first extension part 81b with the second extension part 91b by means of the first binding layer 82 and/or the second binding layer 92, the portions, protruding from the cathode plate 11, of the ion blocking layer 8 and the reinforcing layer 9 loss stickiness, such that the problem that sticking to the winding equipment results in failure is avoided. Meantime, the ion blocking layer 8 and the reinforcing layer 9 are adhered to each other, which reduces the risk that the ion blocking layer 8 and the reinforcing layer 9 are shed from the cathode plate 11 and improves the reliability of the ion blocking layer 8 and the reinforcing layer 9 in the service life of the battery cell 7.

Connecting the first extension part 81b with the second extension part 91b by means of the first binding layer 82 and/or the second binding layer 92 specifically means that by only providing the first binding layer 82 on the first extension part 81b or only providing the second binding layer 92 on the second extension part 91b, the first extension part 81b and the second extension part 91b can be connected by means of the first binding layer 82 or the second binding layer 92, or that by providing the first extension part 81b on the first binding layer 82 and providing the second binding layer 92 on the second extension part 91b, the first extension part 81b and the second extension part 91b are connected by means of the first binding layer 82 and the second binding layer 92.

In other embodiments, the blocking base layer 81 further comprises a third extension part. The third extension part is connected with the first body part 81a and located at the opposite end of the first extension part 81b in the direction of the winding axis K and protrudes from the first attachment region. The reinforcing base layer 91 further comprises a fourth extension part. The fourth extension part is connected with the second body part 91a and located at the opposite end of the second extension part 91b in the direction of the winding axis K and protrudes from the second attachment region. The first extension part 81b and the second extension part 91b are connected at one end in the direction of the winding axis K by means of the first binding layer 82 and/or the second binding layer 92. The third extension part and the fourth extension part are connected at the other end in the direction of the winding axis K by means of the first binding layer 82 and/or the second binding layer 92. The risk can be further reduced that the ion blocking layer 8 and the reinforcing layer 9 are shed from the cathode plate 11, and the reliability of the ion blocking layer 8 and the reinforcing layer 9 in the service life of the battery cell 7 can be improved.

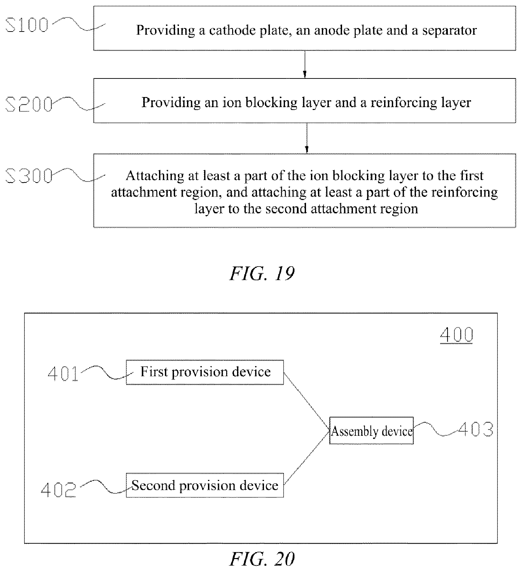

FIG. 19 is a schematic flow diagram of a method for manufacturing an electrode assembly provided in some embodiments of the present application.

As shown in FIG. 19, the method for manufacturing an electrode assembly of the embodiments of the present application comprises the following steps: S100, providing a cathode plate, an anode plate and a separator, wherein the separator is used for separating the cathode plate and the anode plate, the cathode plate, the separator and the anode plate are wound in a winding direction to form a bent region, the cathode plate is bent M times to form M bent parts in the bent region, a first attachment region is formed on an inner surface of an Nth-bend part of the cathode plate, and a second attachment region is formed on an outer surface of the Nth-bend part, wherein M and N are positive integers, M ≥ 2 and 1 ≤ N ≤ M; S200, providing an ion blocking layer and a reinforcing layer; and S300, attaching at least a part of the ion blocking layer to the first attachment region, wherein the ion blocking layer is used for preventing ions deintercalated from the first attachment region from being intercalated into the anode plate adjacent to the first attachment region during charging, and attaching at least a part of the reinforcing layer to the second attachment region, wherein the reinforcing layer is provided with ion exchange channels which are through holes provided in a thickness direction of the reinforcing layer. It should be noted that for a related structure of the electrode assembly manufactured by the above method for manufacturing an electrode assembly, reference may be made to the electrode assemblies provided in the above embodiments.

When the electrode assembly is assembled based on the above method for manufacturing an electrode assembly, it is not necessary to sequentially perform the above steps, that is to say, the steps may be performed in an order same to or different from the order mentioned in the embodiments, or the several steps are performed simultaneously. For example, steps S100 and S200 may be performed in a random order or may be performed simultaneously. FIG. 20 is a schematic block diagram of a system for manufacturing an electrode assembly provided in some embodiments of the present application.

As shown in FIG. 20, the system 400 for manufacturing an electrode assembly of the embodiments of the present application comprises:
a first provision device 401 for providing a cathode plate, an anode plate and a separator, wherein the separator is used for separating the cathode plate and the anode plate, the cathode plate, the separator and the anode plate are wound in a winding direction to form a bent region, the cathode plate is bent M times to form M bent parts in the bent region, a first attachment region is formed on an inner surface of an Nth-bend part of the cathode plate, and a second attachment region is formed on an outer surface of the Nth-bend part, wherein M and N are positive integers, M ≥ 2 and 1 ≤ N ≤ M;
a second provision device 402 for providing an ion blocking layer and a reinforcing layer; and
an assembly device 403 for attaching at least a part of the ion blocking layer to the first attachment region, wherein the ion blocking layer is used for preventing ions deintercalated from the first attachment region from being intercalated into the anode plate adjacent to the first attachment region during charging and for attaching at least a part of the reinforcing layer to the second attachment region, wherein the reinforcing layer is provided with ion exchange channels which are through holes provided in a thickness direction of the reinforcing layer.

For a related structure of the electrode assembly manufactured by the above manufacturing system, reference may be made to the electrode assemblies provided in the above embodiments.

Those skilled in the art should understand that, although some of the embodiments described herein comprise some but not other features included in other embodiments, the combination of the features of different embodiments means being within the scope of the present application and forms different embodiments. For example, in the claims, any one of the embodiments set forth thereby can be used in any combination. the above embodiments are merely used for illustrating rather than limiting the technical solutions of the present application. Although the present application has been illustrated in detail with reference to the above embodiments, it should be understood by those of ordinary skill in the art that the technical solutions recorded in the above embodiments may still be modified, or some of the technical features thereof may be equivalently substituted; and while these modifications or substitutions do not make the essence of the corresponding technical solution depart from the spirit or scope of the technical solutions of the embodiments of the present application.

## Claims

1. An electrode assembly, comprising:
a cathode plate, an anode plate and a separator, wherein the cathode plate, the separator and the anode plate are wound in a winding direction to form a bent region,
the cathode plate is bent M times to form M bent parts in the bent region,
a first attachment region is formed on an inner surface of an Nth-bend part of the cathode plate, and a second attachment region is formed on an outer surface of the Nth-bend part, wherein M and N are positive integers, M ≥ 2 and 1 ≤ N ≤ M;
an ion blocking layer, wherein at least a part of the ion blocking layer is attached to the first attachment region, and the ion blocking layer is used for preventing ions deintercalated from the first attachment region from being intercalated into the anode plate adjacent to the first attachment region during charging; and
a reinforcing layer, wherein at least a part of the reinforcing layer is attached to the second attachment region, and the reinforcing layer is provided with ion exchange channels which are through holes provided in a thickness direction of the reinforcing layer.

2. The electrode assembly of claim 1, wherein the Nth-bend part comprises a first-bend part and/or a second-bend part.

3. The electrode assembly of claim 1 or 2, wherein the electrode assembly has a flat region connected with the bent region; and
one end, extending in the winding direction, of each of the ion blocking layer and the reinforcing layer is located in the flat region and the other end of each of the ion blocking layer and the reinforcing layer is located in the bent region, or
the two ends, extending in the winding direction, of each of the ion blocking layer and the reinforcing layer are all located in the flat region.

4. The electrode assembly of any one of claims 1-3, wherein the ion blocking layer comprises a first binding layer attached to the first attachment region; and
the reinforcing layer comprises a reinforcing base layer and a second binding layer, and the reinforcing base layer is attached to the second attachment region by means of the second binding layer.

5. The electrode assembly of any one of claims 1-3, wherein the ion blocking layer comprises a blocking base layer and a first binding layer, and the blocking base layer is attached to the first attachment region by means of the first binding layer; and
the reinforcing layer comprises a reinforcing base layer and a second binding layer, and the reinforcing base layer is attached to the second attachment region by means of the second binding layer.

6. The electrode assembly of claim 5, wherein the blocking base layer comprises a first body part and a first extension part connected with the first body part, the first binding layer is used for binding at least a part of the first body part to the first attachment region, and the first extension part protrudes from the first attachment region in the direction of the winding axis of the electrode assembly;
the reinforcing base layer comprises a second body part and a second extension part connected with the second body part, the second binding layer is used for binding at least a part of the second body part to the second attachment region, and the second extension part protrudes from the second attachment region in the direction of the winding axis;
the direction of the winding axis is perpendicular to the winding direction; and
the first extension part and the second extension part are connected by means of the first binding layer and/or the second binding layer.

7. The electrode assembly of claim 5, wherein the blocking base layer is made of a material including at least one of polyvinyl chloride, polyethylene, polypropylene, polyvinylidene fluoride, a hexafluoropropylene-vinylidene fluoride copolymer, a tetrafluoropropylene-vinylidene fluoride copolymer, a trifluorochloropropylene-vinylidene fluoride copolymer, polyethylene terephthalate, polyimide, polyetherimide, polycarbonate, polystyrene, polyphenylene sulfide, polyvinylidene fluoride or a copolymer thereof, polyarylate, fibers, nylon and non-woven fabrics.

8. The electrode assembly of any one of claims 4-6, wherein the first binding layer and/or the second binding layer are/is made of a material including at least one of an acrylic acid-acrylate copolymer, a butadiene-styrene copolymer, a styrene-acrylic acid copolymer, a styrene-acrylate copolymer, an ethylene-vinyl acetate copolymer, acrylic acid grafted polyethylene, maleic anhydride grafted polyethylene, acrylic acid grafted polypropylene, maleic anhydride grafted polypropylene, polyvinylidene fluoride, carboxymethyl cellulose, polyimide, polyetherimide, polyethylene terephthalate, a styrene-isoprene-styrene copolymer rubber, an ethylene-vinyl acetate copolymer bisphenol A epoxy resin, an ethylene-vinyl acetate copolymer bisphenol F epoxy resin, a glyceryl ether epoxy resin, a glyceryl ester epoxy resin, a silicone resin, polyurethane and a styrene-isoprene-styrene copolymer.

9. The electrode assembly of any one of claims 4-6, wherein the reinforcing base layer is made of a material including at least one of polyvinyl chloride, polyethylene, polypropylene, polyvinylidene fluoride, a hexafluoropropylene-vinylidene fluoride copolymer, a tetrafluoropropylene-vinylidene fluoride copolymer, a trifluorochloropropylene-vinylidene fluoride copolymer, polyethylene terephthalate, polyimide, polyetherimide, polycarbonate, polystyrene, polyphenylene sulfide, polyvinylidene fluoride or a copolymer thereof, polyarylate, fibers, nylon and non-woven fabrics.

10. The electrode assembly of claim 5 or 6, wherein the through holes penetrate through the reinforcing base layer and the second binding layer.

11. The electrode assembly of any one of claims 1-10, wherein in the winding direction, adsorption regions and perforated regions are arranged on the reinforcing layer, at least a part of the through holes are distributed in the perforated regions, and the adsorption regions has a porosity smaller than that of the perforated regions; or
in the direction of the winding axis of the electrode assembly, the through holes are distributed on the reinforcing layer in a broken line or a curved line.

12. A battery cell, comprising: a housing, an electrolyte solution, a cover plate and at least one electrode assembly of any one of claims 1-11, wherein
the housing has a receiving cavity and an opening, and the electrode assembly and the electrolyte solution are received in the receiving cavity; and
the cover plate is used for sealing the opening of the housing.

13. A battery, comprising a case and at least one battery cell of claim 12, wherein the battery cell is received in the case.

14. A power consuming device configured to receive power provided by the battery of claim 13.

15. A processing method for an electrode assembly, comprising:
providing a cathode plate, an anode plate and a separator, wherein the separator is used for separating the cathode plate and the anode plate, the cathode plate, the separator and the anode plate are wound in a winding direction to form a bent region,
the cathode plate is bent M times to form M bent parts in the bent region,
a first attachment region is formed on an inner surface of an Nth-bend part of the cathode plate, and a second attachment region is formed on an outer surface of the Nth-bend part, wherein M and N are positive integers, M ≥ 2 and 1 ≤ N ≤ M;
providing an ion blocking layer and a reinforcing layer; and
attaching at least a part of the ion blocking layer to the first attachment region, wherein the ion blocking layer is used for preventing ions deintercalated from the first attachment region from being intercalated into the anode plate adjacent to the first attachment region during charging, and attaching at least a part of the reinforcing layer to the second attachment region, wherein the reinforcing layer is provided with ion exchange channels which are through holes provided in a thickness direction of the reinforcing layer.

16. A processing device for an electrode assembly, comprising:
a first provision device for providing a cathode plate, an anode plate and a separator, wherein
the separator is used for separating the cathode plate and the anode plate, the cathode plate, the separator and the anode plate are wound in a winding direction to form a bent region,
the cathode plate is bent M times to form M bent parts in the bent region,
a first attachment region is formed on an inner surface of an Nth-bend part of the cathode plate, and a second attachment region is formed on an outer surface of the Nth-bend part, wherein M and N are positive integers, M ≥ 2 and 1 ≤ N ≤ M;
a second provision device for providing an ion blocking layer and a reinforcing layer; and
an assembly device for attaching at least a part of the ion blocking layer to the first attachment region, wherein the ion blocking layer is used for preventing ions deintercalated from the first attachment region from being intercalated into the anode plate adjacent to the first attachment region during charging, and for attaching at least a part of the reinforcing layer to the second attachment region, wherein the reinforcing layer is provided with ion exchange channels which are through holes provided in a thickness direction of the reinforcing layer.
